# EUROPÄISCHE PATENTSCHRIFT

(11) **EP 0 332 055 B1**
(45) Veröffentlichungstag und Bekanntmachung des Hinweises auf die Patenterteilung: **09.06.1993**
(21) Anmeldenummer: 89103684.0
(22) Anmeldetag: 02.03.1989
(51) Int. Cl.: H04L 1/20, H04B 17/00

(54) **Schaltungsanordnung zum Erkennen fehlerhafter Pegelzustände digitaler Signale, die auf eine Busleitung eingespeist werden**
Detection circuit arrangement for faulty levels of digital signals injected in a bus
Circuit pour la détection de niveaux défectueux de signaux numériques qui sont injectés sur un bus

(30) Priorität: 08.03.1988 DE 3807566
(43) Veröffentlichungstag der Anmeldung: 13.09.1989
(73) Patentinhaber: Siemens Nixdorf Informationssysteme Aktiengesellschaft, 33102 Paderborn (DE)
(72) Erfinder: Krause, Thomas-Michael, D-8051 Allershausen (DE); Weidenberg, Kai, D-4790 Paderborn (DE)
(74) Vertreter: Fuchs, Franz-Josef, Dr.-Ing.

(56) Entgegenhaltungen:
- EP-A- 0 030 095
- GB-A- 2 008 900
- GB-A- 2 134 678
- US-A- 3 950 705

## Beschreibung

Die Erfindung betrifft eine Schaltungsanordnung zum Erkennen fehlerhafter Pegelzustände digitaler Signale, die von mindestens einem mit Datensignalen angesteuerten Treiberbaustein auf eine Busleitung eingespeist werden, wobei zwischen den jeweiligen Treiberbaustein und die Busleitung ein Entkopplungsglied geschaltet ist.

In digital arbeitenden Kommunikationssystemen sind die verschiedenen Teilnehmer über eine Datensammelschiene oder einen Datenbus miteinander verbunden und tauschen über diesen ihre Informationen aus. Gebräuchliche Datenbusse sind z.B. der Tristate-Bus und der Open-Collector-Bus. Beim Tristate-Bus besitzen die Treiberbausteine einen Tristate-Ausgang, während beim Open-Collector-Bus die Treiberbausteine an ihrem Ausgang einen offenen Kollektor aufweisen. Ein Datenbus kann aus einer oder mehreren Busleitungen bestehen, über die der Datenverkehr seriell bzw. parallel erfolgt. Die Busleitungen sind an ihren Enden zur Vermeidung von Reflexionen sowie zur Einstellung des Signalpegels im Ruhezustand mit ihrem Wellenwiderstand abgeschlossen. An jede Busleitung können eine oder mehrere Treiberbausteine zum Senden von Daten sowie ein oder mehrere Empfängerbausteine angeschlossen sein.

Datenbusse werden beispielsweise in Fernmeldevermittlungsanlagen eingesetzt. Hierbei sind mehrere Teilnehmer über einen Datenbus an einen zentralen Vermittlungsrechner angeschlossen. Bei Störungen des Datenbus kann es zum Ausfall einer großen Zahl von Teilnehmern kommen, und das gesamte Vermittlungssystem kann blockiert werden. In der Mehrzahl der Fälle ist eine solche Störung auf das fehlerhafte Arbeiten von Treiberbausteinen zurückzuführen. Typische Fehler sind z.B. ein Kurzschluß des Treiberausganges gegen Masse oder ein Kurzschluß des Treiberausganges gegen die Betriebsspannung. Nur selten sind Störungen des Datenbus auf Empfängerbausteine zurückzuführen, da diese lediglich passiv an die Busleitung des Datenbus angeschlossen sind. Ein Ausfall eines Empfängerbausteines hat deshalb im allgemeinen geringe Auswirkungen auf die Funktionsfähigkeit des Datenbus.

Im Falle eines Funktionsausfalls eines Datenbus ist es sehr wichtig, möglichst schnell zu erkennen, an welcher Stelle der Fehler aufgetreten ist, um geeignete Reparaturmaßnahmen einzuleiten. Eine automatische Fehlererkennung könnte somit die Verfügbarkeit und Zuverlässigkeit von Fernmelde- und Datenvermittlungssystemen erhöhen sowie Reparatur- und Ausfallkosten spürbar reduzieren.

Aus der DE-A-27 50 818 ist eine Schaltungsanordnung eingangs genannter Art bekannt. Bei dieser Schaltungsanordnung ist zwischen den Ausgang des Treiberbausteins und die Busleitung als Entkopplungsglied ein Widerstand geschaltet, so daß ein Kurzschluß eines Treiberbausteins gegen Masse zwar den Spannungspegel auf der Busleitung verändert, der Datenbus aber in gewissen Grenzen noch funktionsfähig bleibt. Die Pegeländerung wird von einer elektronischen Auswerteschaltung, die jeder Empfängerbaustein enthält, erkannt. Die Schwellwerte von Komparatoren zum Erkennen der logischen Zustände werden dann so verändert, daß die Spannungspegel der Empfängerschaltung an die veränderten Spannungspegel auf der Busleitung angepaßt sind. Nachteilig bei der bekannten Schaltung ist, daß lediglich der infolge eines Kurzschlusses zwischen Treiberausgang und Masse auftretende Fehler des Datenbus erkannt wird - weitere Fehler bleiben außer Betracht. Weiterhin wird durch die Schaltungsanordnung nur die Auswirkung eines bestimmten Fehlers gemindert, der Fehlerverursacher selbst kann nicht festgestellt werden.

Es ist Aufgabe der Erfindung, eine Schaltungsanordnung anzugeben, die ein fehlerhaftes Arbeiten eines Treiberbausteins sofort erkennt und den Fehlerverursacher unter einer Vielzahl von Treiberbausteinen eindeutig identifiziert. Hierzu sind möglichst einfache Mittel einzusetzen.

Diese Aufgabe wird durch die Merkmale des Patentanspruchs 1 gelöst.

Die Erfindung beruht auf der Erkenntnis, daß bei Bussystemen, in denen zwischen Treiberbaustein und Busleitung ein Entkopplungsglied vorgesehen ist, das Ausgangssignal des Treiberbausteins einen anderen Pegelwert als die Busleitung annehmen kann. Damit läßt sich das Ausgangssignal eines Treiberbausteins eindeutig von den Ausgangssignalen anderer auf die gleiche Busleitung sendender Treiberbausteine unterscheiden, und jeder einzelne Treiberbaustein kann auf fehlerfreies Arbeiten hin überwacht werden.

Die im folgenden beschriebenen logischen Verknüpfungen verwenden positive Logik. Das Grundprinzip der Erfindung ist aber ebenso in negativer Logik anwendbar, der beschriebene Logikpegel ist dann jeweils zu negieren.

Das Ausgangssginal eines Treiberbausteins wird mit dem an seinem Eingang zugeführten Datensignal antivalent verknüpft, d.h. Eingangs- und Ausgangssignal des Treiberbausteins werden miteinander verglichen. Das Ergebnis dieser Verknüpfung ist ein Hilfssignal, welches bei Übereinstimmung von Daten- und Ausgangssignal den Binärwert 0, bei fehlender Übereinstimmung den Binärwert 1 annimmt. Dieses Hilfssignal wird mit einem Freigabesignal, das in an sich bekannter Weise das Durchschalten einer Dateninformation vom Eingang eines Treiberbausteins an seinen Ausgang veranlaßt, zu einem Fehlersignal konjunktiv verknüpft. Das Freigabesignal wird also bei der Erfindung zweifach verwendet. Zum einen, um den Datentransfer vom Eingang des Treiberbausteins an seinen Ausgang zu steuern und zum anderen, um ein Fehlersignal zur Charakterisierung des Betriebszustandes eines Treiberbausteins zu erzeugen. Mit diesen Maßnahmen wird erreicht, daß ein Fehlersignal mit dem Logikpegel 1 jeweils dann erzeugt wird, wenn das Freigabesignal den logischen Zustand 1 hat und der Logikpegel des Datensignals sowie des Ausgangssignals des Treiberbausteins nicht übereinstimmen. Die fehlende Übereinstimmung kann z.B. infolge eines defekten Treiberbausteins entstanden sein. Weist das Freigabesignal den Logikpegel 0 auf, so sendet der Treiberbaustein keine Daten aus, und sein Ausgang ist gesperrt. In diesem Zustand führt das Ausgangssignal den Spannungspegel der Busleitung. Das Datensignal und das Ausgangssignal des Treiberbausteins können dann voneinander abweichen, und das Hilfssignal hat den Logikpegel 1. Wegen der konjunktiven Verknüpfung von Freigabesignal und Hilfssignal wird aber kein Fehlersignal mit dem Logikpegel 1 erzeugt.

Wird jedem Treiberbaustein, der an eine Busleitung angeschlossen ist, eine Schaltungsanordnung nach der Erfindung beigeordnet, so ist es möglich, fehlerhafte Pegelzustände sofort zu erkennen und den fehlerhaft arbeitenden Treiberbaustein zu identifizieren. Die Schaltungsanordnung, die aus wenigen handelsüblichen Bauelementen besteht, kann sehr einfach in bereits vorhandene Buskonfigurationen eingefügt werden. Die entsprechenden Treiberbausteine selbst müssen dabei nicht verändert werden. Dadurch wird gewährleistet, daß die Ausfallswahrscheinlichkeit des Bussystems durch die Schaltungsanordnung zur Fehlererkennung nur unwesentlich erhöht wird. Die Entkopplungsglieder der jeweiligen Treiberbausteine sind so dimensioniert, daß die Auswirkung eines defekten Treiberbausteins auf die anderen, fehlerfrei arbeitenden Treiberbausteine gering bleibt. Ein Fehlersignal wird daher nur am defekten Treiberbaustein erzeugt, wodurch eine eindeutige Zuordnung von Fehlersignal und Treiberbaustein ermöglicht wird. Die maximale Anzahl der so überwachten Treiberbausteine in einem Bussystem wird durch die erfindungsgemäßen Maßnahmen nicht eingeschränkt.

Das Fehlersignal kann Ausgangspunkt für weitere vorteilhafte Maßnahmen sein. So ist es denkbar, das Fehlersignal über eine Meldeeinrichtung anzuzeigen oder mehrere Fehlersignale zusammenzufassen, um so den fehlerfreien bzw. fehlerhaften Betriebszustand eines Bussystems anzuzeigen. Weiterhin kann das Fehlersignal dazu verwendet werden, Steuerelemente wie beispielsweise Schalter und Relais anzusteuern. Damit ist es z.B. möglich, ein automatisches Abschalten eines fehlerhaften Datenbus bzw. ein Umschalten auf einen anderen, fehlerfrei arbeitenden Datenbus zu veranlassen, um eine sehr störsichere Datenübertragungsstrecke zu erhalten.

Eine Weiterbildung der Erfindung zeichnet sich dadurch aus, daß für die konjunktive Verknüpfung ein UND-Glied sowie für die antivalente Verknüpfung ein Exklusiv-ODER-Glied vorgesehen ist. Durch diese Maßnahme wird eine sehr einfache Ausführungsform der Erfindung verwirklicht. Dabei kann auf handelsübliche, kostengünstige Logikbausteine zurückgegriffen werden.

Eine andere Ausführungsform der Erfindung ist dadurch gekennzeichnet, daß für die konjunktive Verknüpfung ein Multiplexer vorgesehen ist, dessen erstem Eingang das Hilfssignal und dessen zweitem Eingang ein Binärsignal mit dem Logikpegel 0 zugeführt ist und dessen Eingangssignale abhängig von dem Freigabesignal auf seinen Ausgang durchgeschaltet werden. Der Multiplexer weist abhängig vom Logikpegel des Freigabesignals zwei Schalterstellungen auf. Hat das Freigabesignal den Binärwert 0, so ist der Schalter des Multiplexers in Ruhestellung. Dies bedeutet, daß sein zweiter Eingang, dem das statische Binärsignal 0 zugeführt ist, zum Ausgang des Multiplexers durchgeschaltet ist. Wenn das Freigabesignal den Binärwert 1 annimmt, wird der Multiplexer in seinen anderen Schaltzustand umgeschaltet, und das am ersten Eingang anliegende Hilfssignal wird auf seinen Ausgang durchgeschaltet.

Wenn als Entkopplungsglied ein Widerstand vorgesehen ist, so ist eine vorteilhafte Ausbildung der Erfindung dadurch möglich, daß ein Treiberbaustein mit Tristate-Ausgang vorgesehen ist, und daß der Widerstand des Entkopplungsgliedes etwa den halben Wert des Wellenwiderstandes hat, mit dem die Busleitung abgeschlossen ist. Der Widerstand des Entkopplungsglieds und die Abschlußwiderstände der Busleitung bilden hierbei einen Spannungsteiler. Der Spannungspegel, der beim Aussenden von Daten durch einen Treiberbaustein auf der Busleitung erzeugt wird, ist gegenüber dem Ausgangssignal um den Spannungsabfall am Widerstand des Entkopplungsglieds verringert. Damit wird auch der Störabstand zwischen den Logikpegeln 0 und 1 verkleinert. Daher wäre es wünschenswert, den Spannungsabfall durch Wahl eines kleinen Widerstandes möglichst gering zu halten. Im Falle eines Kurzschlusses eines an die Signalleitung angeschlossenen Treiberbausteins soll aber sichergestellt sein, daß andere, fehlerfrei arbeitende Treiberbausteine kein Fehlersignal erzeugen. Hierzu muß der Spannungsabfall am Widerstand des Entkopplungsglieds zum Erzeugen des Ausgangssignals aber hinreichend groß sein. Dies kann erreicht werden entweder durch einen hohen Stromfluß durch den Widerstand mit den negativen Folgen einer hohen Strombelastung des Treiberbausteins oder durch Vergrößerung des Widerstandswerts. Ein optimaler Wert des Widerstands ist der halbe Wert des Wellenwiderstands der Busleitung.

Eine andere Ausführungsform sieht vor, daß der Ausgang des Treiberbausteins als offener Kollektor ausgebildet ist, der über einen Widerstand mit der Versorgungsspannung verbunden ist. Dadurch wird erreicht, daß das Kollektorpotential des Treiberausgangs im sperrenden Zustand des Treiberbausteins der Versorgungsspannung entspricht und weitgehend unabhängig vom Spannungspegel der Busleitung ist. Wie nachfolgend beschrieben wird, lassen sich durch diese Maßnahmen weitere Fehler des Treiberbausteins erkennen.

Eine solche Ausführungsform der Erfindung zeichnet sich ferner dadurch aus, daß bei dem zuvor beschriebenen Schaltungsbeispiel für die konjunktive Verknüpfung ein Multiplexer vorgesehen ist, dessen erstem Eingang das Hilfssignal und dessen zweitem Eingang das invertierte Ausgangssignal des Treiberbausteins zugeführt ist und dessen Eingangssignale abhängig von dem Freigabesignal auf seinen Ausgang durchgeschaltet werden. Auf diese Weise wird erreicht, daß bei einem Freigabesignal mit dem Binärwert 1 am Ausgang des Multiplexers das Hilfssignal erscheint, d.h. das Fehlersignal ist vom Ergebnis des Vergleichs zwischen Ausgangssignal des Treiberbausteins und seinem Datensignal abhängig. Hat das Freigabesignal jedoch den Logikpegel 0, so wird der Ausgang des Multiplexers mit dessen zweitem Eingang verbunden und damit das invertierte Ausgangssignal des Treiberbausteins durchgeschaltet. Ein Ausgangssignal mit dem Logikpegel 0 führt somit zu einem Fehlersignal mit dem Logikpegel 1 jeweils dann, wenn das Freigabesignal gleichzeitig den Logikpegel 0 hat. Damit ist es möglich, einen unzulässigen 0-Logikpegel am Ausgang des Treiberbausteins als Fehler zu erkennen. Dies hat dann eine praktische Bedeutung, wenn der Ausgang des Treiberbausteins als offener Kollektor ausgeführt ist. Bei fehlendem Freigabesignal eines solchen Treiberbausteins ist dessen Ausgangstransistor gesperrt. Wie bereits beschrieben, stellt sich dann über den Widerstand, der zwischen Versorgungsspannung und Ausgang des Treiberbausteins geschaltet ist, ein definierter Spannungspegel ein, der unabhängig vom Signalpegel der Busleitung des Datenbus ist. Diesem Spannungspegel kann z.B. der Logikpegel 1 zugeordnet sein. Tritt nun ein Defekt am Ausgang des Treiberbausteins auf, z.B. infolge eines Masseschlusses des Ausgangstransistors, so entspricht der Spannungspegel des Ausgangssignals dauerhaft dem Massenpotential und damit dem Logikpegel 0. Die unzulässige Abweichung der Logikpegel wird durch die Schaltungsanordnung erkannt und führt zu einer Fehlermeldung.

Gemäß einer weiteren Ausführungsform der Erfindung ist der Ausgang des Treiberbausteins als offener Kollektor ausgebildet, der über einen Widerstand mit der Versorgungsspannung verbunden ist, und das Ausgangssignal und das Freigabesignal sind konjunktiv zu einem weiteren Signal verknüpft, das mit dem Fehlersignal zu einem Erkennungssignal disjunktiv verknüpft ist. Diese Schaltungsanordnung ist ähnlich der vorher beschriebenen und erkennt die gleichen Fehler eines Treiberbausteins. Die logischen Verknüpfungen werden hierbei durch einfache logische Bauelemente realisiert. Das fehlerhafte Arbeiten eines Treiberbausteins wird mittelbar über das Erkennungssignal erkannt.

Eine andere Weiterbildung der Erfindung besteht darin, als Entkopplungsglied eine Diode zu verwenden. Dies ist z.B. möglich, wenn der Treiberbaustein einen offenen Kollektorausgang besitzt. Anders als bei Treiberbausteinen mit Tristate-Ausgang fließt bei diesem der Ausgangsstrom nur in einer Richtung. Die Verwendung einer Diode hat hier den Vorteil, daß der Spannungsabfall an der Diode und damit das Ausgangssignal des Treiberbausteins weitgehend unabhängig vom Stromfluß durch die Diode ist.

Wenn das Datensignal eines durch das Freigabesignal freigegebenen Treiberbausteins seinen Signalzustand ändert, so können in der Zeit, die das Datensignal benötigt, um vom Eingang des Treiberbausteins auf dessen Ausgang durchgeschaltet zu werden, die Signalzustände des Ausgangssignals sowie des Datensignals voneinander abweichen. Demzufolge kann während dieser Zeit, die durch die Gatterlaufzeit bestimmt ist und etwa im Bereich von Nano-Sekunden liegt, ein Fehlersignal mit dem Logikpegel 1 erzeugt werden, das ein Störsignal darstellt und ein fehlerhaftes Arbeiten des Treiberbausteins vortäuscht. Nach Ablauf der Gatterlaufzeit nimmt das Fehlersignal bei ordnungsgemäßem Arbeiten des Treiberbausteins wieder den Logikpegel 0 an.

Da die Gatterlaufzeit eines Treiberbausteins im Normalfall um mehrere Größenordnungen kleiner als die Zeit zwischen zwei Zustandswechseln des Datensignals ist, kann ein solches Störsignal im allgemeinen vernachlässigt werden. Will man aber dieses Störsignal vollständig unterbinden, so ist es möglich, die Erfindung derart weiterzubilden, daß das Fehlersignal, dessen Dauer eine vorgegebene Zeit unterschreitet, unterdrückt wird. Wenn diese Zeitlänger als die Gatterlaufzeit eines Treiberbausteins gewählt wird, so wird bei beliebigem Zustandswechsel des Datensignals ein Fehlersignal mit Logikpegel 1 nur bei tatsächlich fehlerhaft arbeitenden Treiberbausteinen ausgegeben.

Ausführungsbeispiele der Erfindung werden im folgenden anhand der Zeichnung beschrieben. Es zeigen
- Figur 1: eine Anordnung von Sende- und Empfangsbausteinen an einer Busleitung,
- Figur 2: eine Schaltungsanordnung zur Fehlererkennung,
- Figur 3: eine andere Schaltungsanordnung zur Fehlererkennung mit einem Multiplexer,
- Figur 4: eine Wahrheitstabelle der Schaltungsanordnungen nach den Figuren 3 und 4,
- Figur 5: eine Anordnung von Sende- und Empfangsbausteinen an einem Tristate-Bus,
- Figur 6: eine Darstellung der Signalzustände für einen Tristate-Bus,
- Figur 7: eine Anordnung von Sende- und Empfangsbausteinen an einem Open-Collector-Bus,
- Figur 8: eine Schaltungsanordnung zur Fehlererkennung an einem Treiberbaustein mit offenem Kollektor,
- Figur 9: eine weitere Schaltungsanordnung zur Fehlererkennung mit Logikbausteinen,
- Figur 10: eine Wahrheitstabelle der Signalzustände der Schaltungsanordnungen nach den Figuren 8 und 9,
- Figur 11: eine Darstellung der Signalzustände über der Zeit bei einem Open-Collector-Bus,
- Figur 12: eine Schaltungsanordnung zum kurzzeitigen Unterdrücken des Fehlersignals,
- Figur 13: eine Schaltungsanordnung, die zum Unterdrükken des Fehlersignals einen monostabilen Multivibrator verwendet und
- Figur 14: eine weitere Schaltungsanordnung zum Unterdrücken des Fehlersignals durch Verwendung eines Taktsignals.

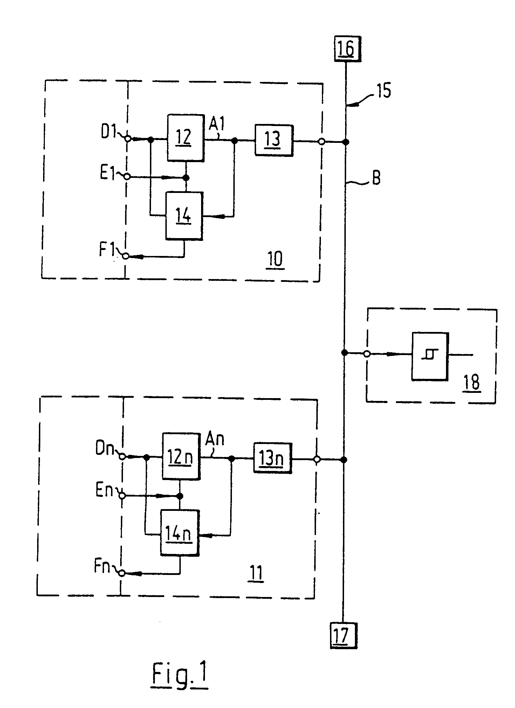

In Figur 1 ist allgemein ein Bussystem mit den daran angeschlossenen Systemelementen dargestellt. Eine Busleitung 15 verbindet die verschiedenen Elemente des Bussystems untereinander. Sie ist an ihren Enden 16, 17 zur Vermeidung von Reflexionen mit ihrem Wellenwiderstand abgeschlossen. Ein Datenbus kann im Falle eines seriellen Bussystems aus einer einzigen Busleitung 15 bestehen; bei parallelen Bussystemen sind mehrere Busleitungen parallelgeschaltet. An die Busleitung 15 können jeweils ein oder mehrere Sende- und Empfängerbausteine angeschlossen sein. In der Figur 1 sind beispielhaft ein erster Sendebaustein 10, ein weiterer Sendebaustein 11 und ein Empfängerbaustein 18 dargestellt. Die Sendebausteine 10, 11 beeinflussen aktiv einen Signalzustand B auf der Busleitung 15, während der Empfängerbaustein 18 passiv das Signal B empfängt und weitgehend rückwirkungsfrei an die Busleitung 15 angeschlossen ist. Zu dem Sendebaustein 10 ist zwischen einen Treiberbaustein 12 mit seinem Ausgangssignal A1 und die Busleitung 15 ein Entkopplungsglied 13 geschaltet, so daß das Ausgangssignal A1 und das Bussignal B unterschiedliche, d.h. voneinander entkoppelte Signalpegel, annehmen können. An den Eingang des Treiberbausteins 12 sind weiterhin ein Datensignal D1 sowie ein Freigabesignal E1 gelegt. Der Treiberbaustein 12 überträgt den Signalzustand des Datensignals D1 in an sich bekannter Weise abhängig vom Signalzustand des Freigabesignals E1 auf die Busleitung 15. Sendet der Treiberbaustein 12 digitale Daten in Form von Spannungs- oder Stromsignalen auf die Busleitung 15, so kann das am Ausgang des Treiberbausteins 12 entstehende Signal A1 dazu benutzt werden, ein fehlerhaftes Arbeiten des Treiberbausteins 12 zu erkennen. Die Bussignale anderer Treiberbausteine, beispielsweise aus dem Sendebaustein 11, stören hierbei nicht.

Zum Feststellen eines Fehlers ist eine Fehlererkennungsschaltung 14 erforderlich, der das Ausgangssignal A1 des Treiberbausteins 12 zugeführt wird.

Der Sendebaustein 11 repräsentiert einen beliebigen anderen über ein Entkopplungsglied 13n an die Busleitung 15 angeschlossenen Sendebaustein. Er ist gleichartig wie der bereits beschriebene Sendebaustein 10 aufgebaut. Dem zugehörigen Treiberbaustein 12n sind ebenfalls ein Datensignal Dn und ein Freigabesignal En zugeführt. Eine Fehlererkennungsschaltung 14n verknüpft ein Ausgangssignal An sowie die Signale Dn, En zu einem Fehlersignal Fn.

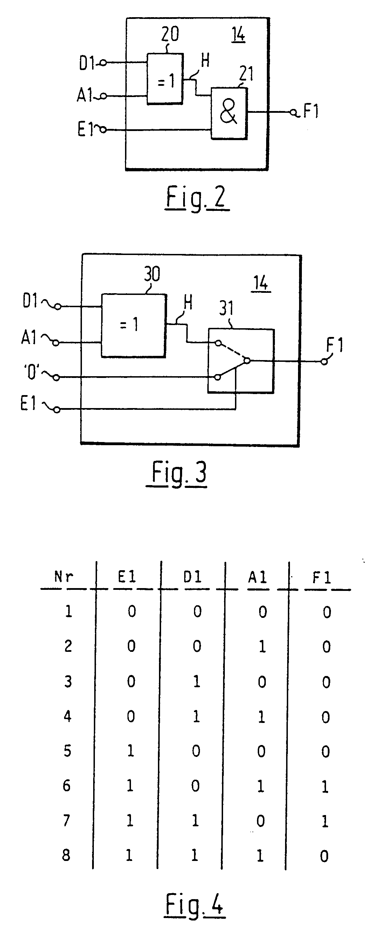

In der Figur 2 ist die Fehlererkennungsschaltung 14 dargestellt. Sie enthält ein Exklusiv-ODER-Glied 20, dem an seinen Eingängen die Datensignale D1 sowie das Ausgangssignal A1 zugeführt sind. Das Exklusiv-ODER-Glied 20 vergleicht die beiden Eingangssignale D1 und A1 auf Übereinstimmung ihrer Logikpegel. Ist dies der Fall, so erzeugt das Exklusiv-ODER-Glied 20 ein Hilfssignal H mit dem Logikpegel 0, bei fehlender Übereinstimmung eines mit dem Logikpegel 1.

Das Hilfssignal H wird dem einen Eingang eines UND-Gliedes 21 und das Freigabesignal E1 dem anderen Eingang zugeführt. Haben beide Signale den Logikpegel 1, so wird am Ausgang des UND-Gliedes 21 ein Fehlersignal F1 mit dem Logikpegel 1 erzeugt. Der Logikpegel 1 signalisiert hierbei ein fehlerhaftes Arbeiten des Treiberbausteins.

Die Fehlersignale mehrerer Sendebausteine lassen sich auch zusammenfassen, um so den fehlerfreien oder fehlerhaften Zustand eines gesamten Bussystems zu erkennen. Ferner können aus dem gewonnenen Fehlersignal weitere Steuersignale abgeleitet werden, um im Fehlerfalle zum Beispiel ein Umschalten auf einen anderen Bus zu veranlassen, oder um eine Fehlermeldung an übergeordnete Systeme abzugeben.

Zur Realisierung der Schaltungsanordnung nach der Erfindung sind lediglich drei einfache Bauelemente erforderlich: ein Widerstand als Entkopplungsglied, ein Exklusiv-ODER-Glied und ein UND-Glied. Mit diesen einfachen, handelsüblichen Bauelementen können die Treiberbausteine eines Datenbus extern beschaltet werden. Da diese Bauelemente nur wenig störanfällig sind, wird die Ausfallwahrscheinlichkeit, bzw. die Störanfälligkeit des Bussystems nicht erhöht. Die Bauelemente zur Fehlererkennung können aber auch mit dem Treiberbaustein in einer integrierten Schaltung zusammengefaßt sein. Der Raumbedarf einer solchen Schaltungsanordnung ist dann minimal.

Figur 3 zeigt ein anderes Ausführungsbeispiel der Fehlererkannungsschaltung 14. In dieser Schaltungsanordnung wird das Hilfssignal H analog zur vorher beschriebenen Schaltung durch ein Exklusiv-ODER-Glied 30 gebildet. Anstelle des UND-Gliedes wird als konjunktive Verknüpfung jedoch ein Multiplexer 31 verwendet. An dessen einen Eingang ist das Hilfssignal H gelegt, an dessen anderem Eingang liegt stationär der Binärwert 0 an. Die Schalterstellung des Multiplexers 31 wird durch das Freigabesignal E1 gesteuert. Hat dieses den Logikpegel 0, so wird der am Eingang des Multiplexers 31 liegende Binärwert 0 auf seinen Ausgang durchgeschaltet. Wenn das Freigabesignal E1 den Binärwert 1 hat, wird der Schalter des Multiplexers 31 in die gestrichelt eingezeichnete Stellung geschaltet. Der Logikpegel des Fehlersignals F1 entspricht dann dem Hilfssignal H.

Figur 4 zeigt die Wahrheitstabelle der Signalzustände der in den Figuren 2 und 3 dargestellten Schaltungsanordnungen. Die Signalzustände sind von 1 bis 8 durchnumeriert. Aus der Wahrheitstabelle ist zu entnehmen, daß ein Fehlersignal F1 jeweils dann erzeugt wird, wenn bei einem Binärwert 1 des Freigabesignals E1 das Ausgangssignal A1 des Treiberbausteins 12 vom Datensignal D1 abweicht. Dies ist bei den Zuständen mit Nummer 6 und 7 der Fall.

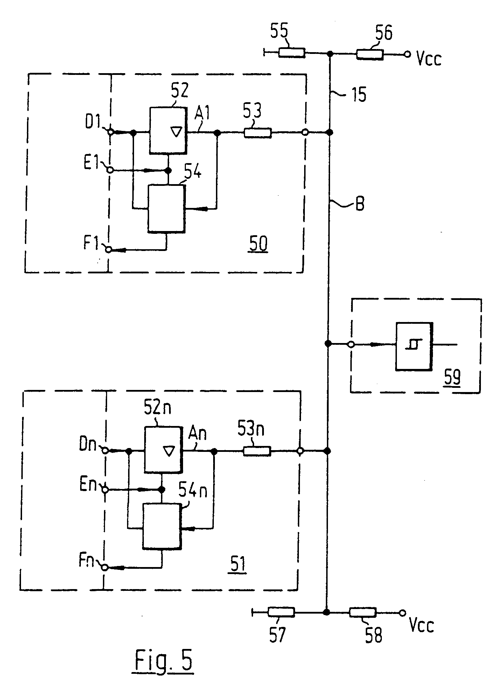

In der Figur 5 ist ein Tristate-Bussystem dargestellt, bei dem die Treiberbausteine 52,52n eines Sendebausteins 50 bzw. 51 Tristate-Ausgänge besitzen. Ein solcher Treiberbaustein 52,52n kann hierbei an seinem Ausgang drei Zustände einstellen: Einen High-Pegel mit positiver Spannung, der dem Binärwert 1 entspricht, einen Low-Pegel mit annäherndem Massepotential, der dem Binärwert 0 entspricht sowie einen hochohmigen Zustand, den sogenannten Z-Zustand, bei dem der Treiberausgang sperrt. Die Busleitung 15 des Tristate-Bus ist an ihrem einen Ende mit einem Widerstand 55 und einem Widerstand 56 so beschaltet, daß der Spannungspegel ihres Signals B im Ruhezustand, d.h. wenn alle angeschlossenen Treiberbausteine im Z-Zustand sind, der halben Betriebsspannung Vcc entspricht. Am anderen Ende der Signalleitung bilden ein Widerstand 57 und ein Widerstand 58 einen entsprechenden Spannungsteiler. Die Widerstände 55 bis 58 sind dabei so bemessen, daß sie den Wellenwiderstand der Busleitung nachbilden. Als Entkopplungsglied wird ein Widerstand 53 verwendet. Durch ihn fließen Ströme mit wechselndem Vorzeichen, abhängig davon, welchen Binärwert der Treiberbaustein 52 auf die Busleitung 15 sendet. Der Widerstand 53 bildet mit den Abschlußwiderständen 55 bis 58 der Busleitung 15 einen Spannungsteiler. Demzufolge sind die Spannungspegel des Signals B auf der Busleitung 15 um den Spannungsabfall am Widerstand 53 reduziert. Entspricht der Widerstand 53 dem halben Wellenwiderstand der Busleitung 15, so sind die Signalpegel B der Busleitung 15 im Ruhestand 1/2 Vcc, im binären 1-Zustand 3/4 Vcc und im binären 0-Zustand 1/4 Vcc.

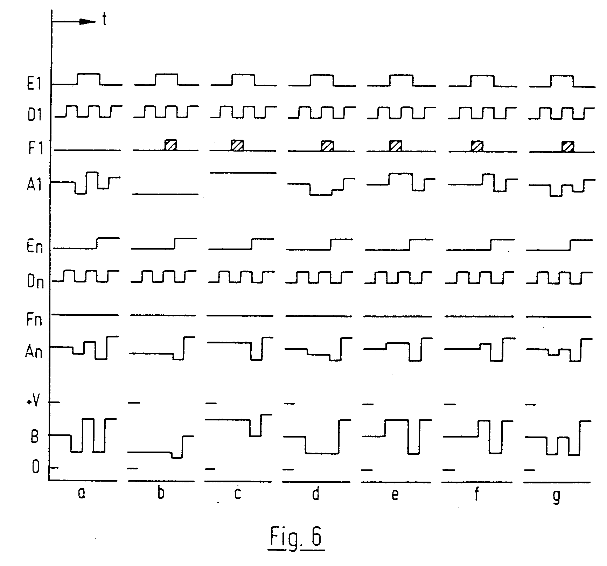

In Figur 6 sind die Spannungspegel des Signals B der Busleitung 15 über der Zeit t dargestellt. Weiterhin sind auch die Zustände des Freigabesignals E1, des Datensignals D1, des Fehlersignals F1 und des Ausgangssignals A1 des Sendebausteins 50 dargestellt. Ferner werden die Zustände der Signale En, Dn, Fn des anderen an die Busleitung angeschlossenen Sendebausteins 51 wiedergegeben.

In Figur 6 werden verschiedene Betriebszustände a bis g des Treiberbausteins 52 betrachtet. Dabei wird jeweils angenommen, daß der weitere Sendebaustein 51 einwandfrei arbeitet. Im Betriebszustand a ist der Normalzustand wiedergegeben. Beide Sendebausteine 50,51 arbeiten fehlerlos, und die Fehlersignale F1, Fn weisen den Logikpegel 0 auf. Im Betriebszustand b sei angenommen, daß der Ausgang des Treiberbausteins 52 einen Kurzschluß gegen Masse habe. Dementsprechend ist sein Ausgangssignal A1 dauerhaft auf dem Spannungspegel 0. Liegen am Eingang des Treiberbausteins 52 das Datensignal D1 sowie das Freigabesignal E1 mit dem Binärwert 1 an, so erkennt die Fehlererkennungsschaltung 54 die Abweichung des Ausgangssignals A1 vom Datensignal D1 und erzeugt das Fehlersignal F1 mit Logikpegel 1. Damit kann der Treiberbaustein 52 als fehlerhaft identifiziert und z.B. ausgetauscht werden. Gleichzeitig ist aber noch die Bedingung zu erfüllen, daß die Fehlererkennung rückwirkungsfrei arbeitet, d.h. bei weiteren Sendebausteinen, wie z.B. beim Sendebaustein 51, darf keine Fehlermeldung erfolgen. Da die Sendebausteine 50,51 an eine gemeinsame Busleitung angeschlossen sind, bewirkt der Masseschluß des Treiberbausteins 52 im Ruhezustand des Sendebausteins 51 eine Potentialverschiebung des Ausgangssignals An gegen Masse. Dies bleibt ohne Wirkung auf eine Fehlersignalbildung, solange das Freigabesignal En den Binärwert 0 hat. Schaltet dieses auf den Wert 1 um, so führt das Ausgangssignal An aufgrund des Entkopplungsglieds 53n die für die Binärwerte 1 und 0 vorgesehenen Signalpegel, und es kommt ebenfalls zu keiner Fehlermeldung.

Im Betriebszustand c ist als Fehler ein dauerhafter Kurzschluß des Ausgangssignals A1 mit der positiven Betriebsspannung dargestellt. Die Abweichung des Ausgangssignals A1 von Datensignal D1 wird durch das schraffiert gezeichnete Fehlersignal F1 signalisiert. Ein Fehlersignal entsteht, wie im Betriebszustand b, ebenfalls nur am defekten Baustein.

Die Betriebszustände d, e, f, g zeigen weitere Fehler, die nach dem gleichen Grundprinzip erkannt werden. So ist im Betriebszustand d der Fall dargestellt, daß der Treiberbaustein 52 an seinem Ausgang, z.B. infolge eines defekten Halbleiterchips, bei Vorliegen eines Freigabesignals F1 an seinem Ausgang A1 nur Low-Signal abgibt. Der Betriebszustand e zeigt den anderen Fall, bei dem am Ausgang A1 des Treiberbausteins 52 jeweils High-Signal abgegeben wird. Im Betriebszustand f wird als Fehler eine Unterbrechung der Leiterbahn des Ausgangstransistors des Treiberbausteins 52 gegen Masse angenommen. Schließlich ist im Betriebszustand g der Fehlerfall einer Unterbrechnung der Leiterbahn des Ausgangstransistors des Treiberbausteins 52 zur positiven Betriebsspannung Vcc dargestellt.

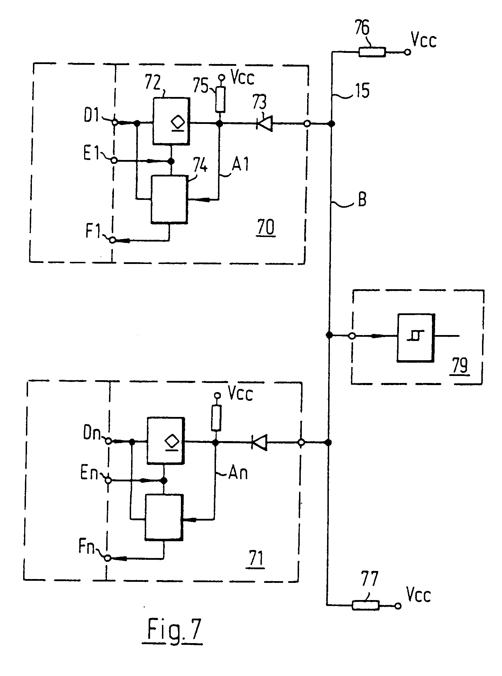

In Figur 7 ist ein Open-Collector-Bus mit einem Sendebaustein 70, einem weiteren, baugleichen Sendebaustein 71 sowie einem Empfängerbaustein 79 dargestellt, die an die Busleitung 15 angeschlossen sind. Die Busleitung 15 ist an ihren Enden über Widerstände 76,77 an die Versorgungsspannung Vcc gelegt. Der Sendebaustein 70 enthält einen Treiberbaustein 72, dessen offener Kollektoranschluß über einen Widerstand 75 an die positive Versorgungsspannung Vcc sowie über eine Diode 73 an die Busleitung 15 gelegt ist. Das Ausgangssignal A1 ist einer Fehlererkennungsschaltung 74 zugeführt. Das Datensignal D1 sowie das Freigabesignal E1 ist an den Eingang des Treiberbausteins 72 und an den Eingang der Fehlererkennungsschaltung 74 gelegt, die an ihrem Ausgang das Fehlersignal F1 erzeugt.

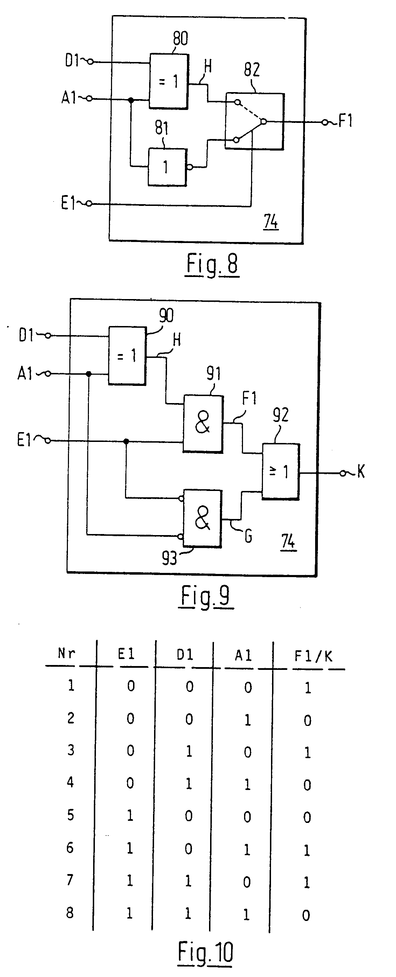

Die digitalen Zustände auf der Busleitung 15 entstehen durch Sperren bzw. Durchschalten eines Ausgangstransistors eines Treiberbausteins. Demnach führt das Ausgangssignal A1 dann High-Signal, welches dem Logikpegel 1 entspricht, wenn der Ausgangsstransistor sperrt, und es führt Low-Signal, welches dem Logikpegel 0 entspricht, wenn der Ausgangstransistor durchschaltet. Durch die Diode 73 und den Widerstand 75 ist das Ausgangssignal A1 vom Signal B auf der Busleitung 15 entkoppelt. Dies bedeutet, daß der Signalpegel des Ausgangssignals A1 weitgehend unabhängig vom jeweils aktuellen Signalpegel der Busleitung 15 ist. Der Widerstand 75 bewirkt insbesondere, daß auch bei gesperrtem Ausgangstransistor des Treiberbausteins 72 das Ausgangssignal A1 High-Pegel und damit den Logikpegel 1 hat. Damit ist es möglich, weitere Fehler eines Treiberbausteins zu erkennen. Führt nämlich das Signal A1 Low-Signal, ohne daß eine entsprechende Ansteuerung durch die Signale E1 und D1 erfolgt, so muß zwangsläufig ein Fehler des Treiberbausteins 72 vorliegen. Zum Erkennen dieses Fehlers ist eine spezielle Fehlererkennungsschaltung 74 vorgesehen, die in der Figur 8 dargestellt ist. Sie besteht aus einem Exklusiv-ODER-Glied 80, dem das Datensignal D1 und das Ausgangssignal A1 zugeführt sind. Dieser Baustein 80 erzeugt durch die antivalente Verknüpfung der Signale D1 und A1 das Hilfssignal H, welches an den einen Eingang eines Multiplexers 82 gelegt ist. An dessen anderen Eingang ist über einen Invertierer 81 das Ausgangssignal A1 gelegt. Der Multiplexer 82 wird über das Freigabesignal E1 in seine Schalterstellungen gesteuert. Hat dieses den Binärwert 1, so befindet sich der Multiplexer in seiner gestrichelt eingezeichneten Schalterstellung, und das Fehlersignal F1 folgt in bereits beschriebener Weise dem Hilfssignal H. Hat das Freigabesignal E1 den Binärwert 0, so wird das invertierte Ausgangssignal A1 an den Ausgang des Multiplexers 1 durchgeschaltet. Damit kann ein unzulässiger Low-Pegel des Ausgangssignals A1 als Fehler erkannt und über das Fehlersignal F1 angezeigt werden.

In Figur 9 ist eine andere Ausführungsform der Schaltungsanordnung dargestellt, welche die gleiche Funktion wie die vorher beschriebene Schaltung hat. Die Schaltungsanordnung umfaßt ein Exklusiv-ODER-Glied 90 sowie ein UND-Glied 91. Die Glieder 90,91 erzeugen in bereits beschriebener Weise aus den Signalen A1, D1, E1 das Fehlersignal F1. Dieses wird aber nicht unmittelbar zur Signalgabe eines Fehlers verwendet, sondern über ein ODER-Glied 92 mit einem weiteren Hilfssignal G disjunktiv zu einem Erkennungssignal K verknüpft, das einen Fehler signalisiert. Das Signal G wird über ein UND-Glied 93 erzeugt, an dessen invertierenden Eingängen das Ausgangssignal A1 und das Freigabesignal E1 gelegt sind. Die Schaltungsanordnung erzeugt somit im Fehlerfall ein Erkennungssignal K mit dem Binärwert 1, wenn entweder das Fehlersignal F1 den Binärwert 1 oder die Signale A1 und E1 gleichzeitig den Binärwert 0 haben.

Die Figur 10 zeigt die Wahrheitstabelle für die Signale der äquivalenten Schaltungsanordnungen nach den Figuren 8 und 9.

Wie oben beschrieben, dient als Signal zum Erkennen eines Fehlers bei der Schaltungsanordnung nach Figur 8 das Fehlersignal F1 und bei der Schaltungsanordnung nach Figur 9 das Erkennungssignal K. Die Signalzustände sind von 1 bis 8 durchnumeriert. In den Nummern 5,6,7,8 stimmen die Wahrheitstabellen nach den Figuren 4 und 10 überein. Beim Open-Collector-Bus sind in der Wahrheitstabelle nach der Figur 10 mit den Nummern 1 und 3 zwei weitere Fehlerzustände definiert.

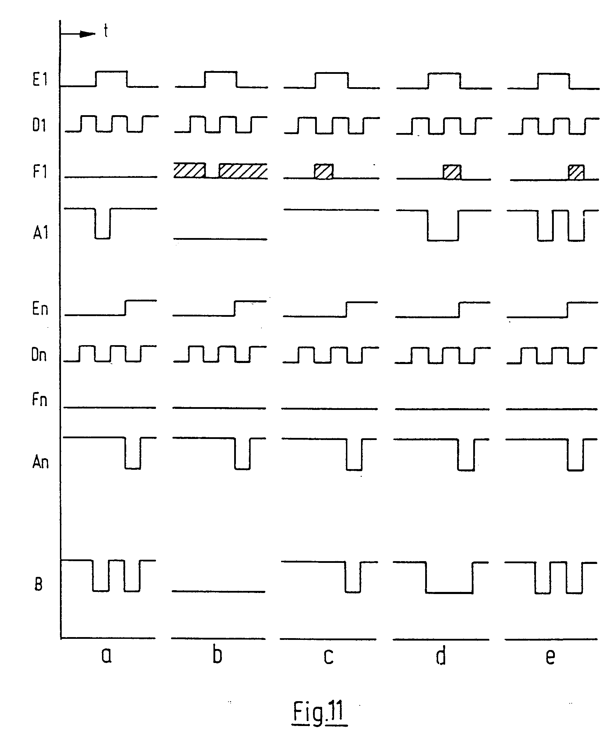

In der Figur 11 sind über der Zeit t die Signalzustände des Open-Collector-Bus nach der Figur 7 in verschiedenen Betriebszuständen a bis e dargestellt. Die Signale werden mit Hilfe der Fehlererkennungsschaltung 74 nach Figur 8 erzeugt. Der Betriebszustand a gibt den fehlerfrei arbeitenden Zustand des Treiberbausteins 72 wieder. Die Signalfolge des Betriebszustands b tritt dann auf, wenn der Ausgang des Treiberbausteins 72 dauerhaft gegen Masse kurzgeschlossen ist. Dies führt zu einem dauerhaften Fehlersignal F1 mit Binärwert 1, ausgenommen dann, wenn bei einem Freigabesignal E1 mit dem Binärwert 1 das Datensignal D1 den Binärwert 0 hat. Der weitere Sendebaustein 71 mit den Signalen En, Dn, Fn, An bleibt aufgrund seiner Entkopplung von diesem Fehler unbeeinflußt. Das Fehlersignal F1 kann also auch hier eindeutig dem fehlerverursachenden Treiberbaustein 72 zugeordnet werden. Der Betriebszustand b wird in der Wahrheitstabelle nach Figur 10 durch die Zustände Nr. 1 und 3 wiedergegeben. Im Betriebszustand c der Figur 11 sei angenommen, daß der Ausgangsanschluß des Treiberbausteins 72 dauerhaft High-Pegel führe, z.B. infolge eines internen Kurzschlusses gegen die positive Betriebsspannung Vcc. Der daraus resultierende Signalzustand entspricht Nr. 6 der Wahrheitstabelle nach Figur 10. Im Betriebszustand d ist das fehlerhafte Arbeiten des Treiberbausteins 72 dadurch gekennzeichnet, daß auch bei einem Freigabesignal mit Binärwert 1 jeweils an seinem Ausgang Low-Signal abgegeben wird. In der Wahrheitstabelle nach Figur 10 wird dieser Signalzustand unter Nr. 7 wiedergegeben. Abschließend ist im Betriebszustand e ein Fehlerfall angegeben, bei dem die Leiterbahn zwischen dem Widerstand 75 und der Versorgungsspannung Vcc unterbrochen ist. Das Ausgangssignal A1 folgt dann dem Signal B der Busleitung. Dies wird als Fehler entsprechend Nr. 1 oder 3 der Wahrheitstabelle nach Figur 10 erkannt.

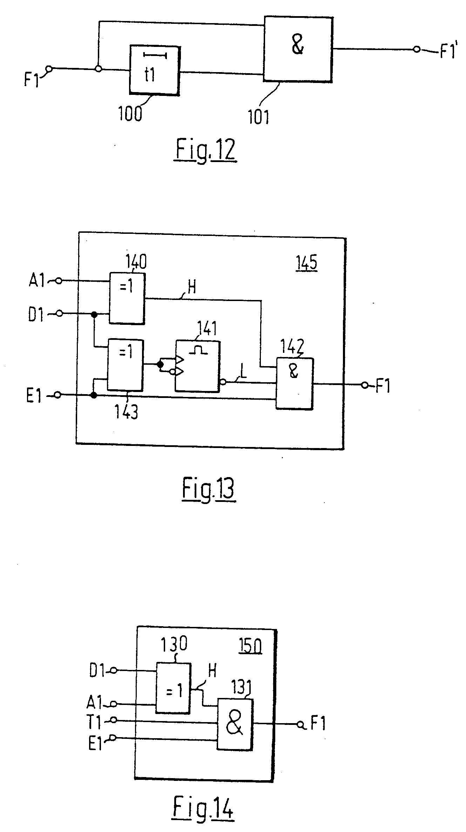

In Figur 12 ist eine Schaltungsanordnung dargestellt, die das Fehlersignal F1, dessen Dauer eine vorgegebene Zeit unterschreitet, unterdrückt. Das Fehlersignal F1 wird sowohl dem Eingang eines Verzögerungsglieds 100 als auch einem Eingang eines UND-Glieds 101 zugeführt. Das Verzögerungsglied 100 kann zum Erzeugen von Verzögerungszeiten t1 im Nano-Sekundenbereich aus einfachen Gatterbausteinen wie Invertern oder ODER-Gliedern aufgebaut sein. Der Ausgang des Verzögerungsgliedes 100 ist auf den anderen Eingang des UND-Gliedes 101 gelegt. Dessen Ausgangssignal F1' übernimmt somit den Signalzustand des Fehlersignals F1 erst nach Ablauf der Verzögerungszeit t1 des Verzögerungsgliedes 100. Damit lassen sich die durch die Gatterlaufzeit eines Treiberbausteines hervorgerufenen impulsförmigen Fehlersignale vollständig unterdrücken.

In der Figur 13 ist eine Fehlererkennungsschaltung 145 dargestellt, die ebenfalls das Fehlersignal für eine vorgegebene Zeit unterdrückt. Sie enthält ein Exklusiv-ODER-Glied 140, dem das Ausgangssignal A1 sowie das Datensignal D1 zugeführt sind. Das Hilfssignal H des Exklusiv-ODER-Glieds 140 ist an einen Eingang eines UND-Gliedes 142 geführt, an dessen weitere zwei Eingänge das Freigabesignal E1 und das invertierte Ausgangssignal L eines retriggerbaren Multivibrators 141 gelegt sind. Dieser wird sowohl durch positive als auch negative Flanken des Ausgangssignals eines weiteren Exklusiv-ODER-Gliedes 143 gesetzt. Dem Exklusiv-ODER-Glied 143 ist an einem Eingang das Datensignal D1 und an seinem anderen Eingang das Freigabesignal E1 zugeführt. Bei jedem Zustandswechsel des Datensignals D1 bzw. des Freigabesignals E1 wird somit der Multivibrator 141 gesetzt, und dessen Ausgangssignal L nimmt für eine vorbestimmte, einstellbare Zeit den Logikpegel 0 an. In dieser Zeit führt das Ausgangssignal F1 des UND-Gliedes 142 den Logikpegel 0, und zwar unabhängig vom Logikpegel des Hilfssignals H, das aufgrund der Gatterlaufzeit des Treiberbausteins bei Zustandswechsel des Datensignals D1 wie beschrieben kurzzeitig den Logikpegel 1 führen kann. Solche kurzzeitigen Störimpulse werden also nicht an den Ausgang der Fehlererkennungsschaltung 145 durchgeschaltet.

In der Figur 14 ist eine weitere Schaltungsvariante dargestellt, die ein kurzzeitiges Unterdrücken des Fehlersignals F1 unter Verwendung eines Taktsignals T1 ermöglicht. Eine Fehlererkennungsschaltung 150 besteht aus einem Exklusiv-ODER-Glied 130, dessen beiden Eingängen das Datensignal D1 und das Ausgangssignal A1 zugeführt sind. Einem das Fehlersignal F1 erzeugenden UND-Glied 131 sind das Hilfssignal H des Exklusiv-ODER-Gliedes 130, das Freigabesignal E1 sowie das Taktsignal T1 an seinen Eingängen zugeführt. Das Taktsignal dient dazu, den Datentransfer bei der seriellen Übertragung von Daten auf einen Datenbus zu steuern. Dementsprechend ist das Taktsignal T1 mit dem Datensignal D1 synchronisiert, wobei seine Frequenz ein ganzzahliges Vielfaches der Frequenz des Datensignals D1 ist, beispielsweise die doppelte Frequenz. Ein Zustandswechsel des Datensignals D1 wird dabei durch einen Zustandswechsel des Taktsignals T1 von logisch 1 nach logisch 0 ausgelöst. Durch die konjunktive Verknüpfung des Taktsignals T1 mit dem Hilfssignal H und dem Freigabesignal E1 im UND-Glied 131 wird erreicht, daß jeweils nach einem Zustandswechsel des Datensignals D1 das Fehlersignal F1 für eine vorgegebene Zeit, die durch die Dauer des logischen Zustandes 0 des Taktsignals T1 bestimmt ist, unterdrückt wird.

Schließlich sei noch auf die Schaltungsvariante hingewiesen, bei der das Freigabesignal E1 verzögert wird. Diese Variante führt dann zu einem Unterdrücken des Fehlersignals F1, wenn ein Zustandswechsel des Datensignals D1 zeitsynchron mit dem Zustandswechsel des Freigabesignals E1 erfolgt.

## Patentansprüche

1. Schaltungsanordnung zum Erkennen fehlerhafter Pegelzustände digitaler Signale, die von mindestens einem mit Datensignalen (D1) angesteuerten Treiberbaustein (12, 52, 72) auf eine Busleitung (15) eingespeist werden, wobei zwischen den jeweiligen Treiberbaustein (12, 52, 72) und die Busleitung (15) ein Entkopplungsglied (13, 53, 73) geschaltet ist, dadurch **gekennzeichnet,** daß die Schaltungsanordnung so ausgestaltet ist, daß das Ausgangssignal (A1) eines jeden Treiberbausteins (12, 52, 72) mit dem Datensignal (D1) zu einem Hilfssignal (H) antivalent verknüpft wird, welches mit einem Freigabesignal (E1) zu einem Fehlersignal (F1) konjunktiv verknüpft wird, das einen fehlerhaften Pegelzustand und damit ein fehlerhaftes Arbeiten des Treiberbausteins (12, 52, 72) signalisiert.

2. Schaltungsanordnung nach Anspruch 1, dadurch **gekennzeichnet,** daß für die konjunktive Verknüpfung ein UND-Glied (21, 91) und für die antivalente Verknüpfung ein Exklusiv-ODER-Glied (20, 30, 80, 90) vorgesehen ist.

3. Schaltungsanordnung nach Anspruch 1, dadurch **gekennzeichnet,** daß für die konjunktive Verknüpfung ein Multiplexer (31) vorgesehen ist, dessen erstem Eingang das Hilfssignal (H) und dessen zweitem Eingang ein Binärsignal mit dem Logikpegel 0 zugeführt ist, und dessen Eingangssignale abhängig von dem Freigabesignal (E1) auf seinen Ausgang durchgeschaltet werden.

4. Schaltungsanordnung nach Anspruch 1, 2 oder 3, mit einem Widerstand als Entkopplungsglied, dadurch **gekennzeichnet,** daß ein Treiberbaustein (52) mit Tristate-Ausgang vorgesehen ist, und daß der Widerstand (53) des Entkopplungsglieds etwa den halben Wert des Wellenwiderstandes hat, mit dem die Busleitung (15) abgeschlossen ist.

5. Schaltungsanordnung nach einem der Ansprüche 1 bis 3, dadurch **gekennzeichnet,** daß der Ausgang des Treiberbausteins (72) als offener Kollektor ausgebildet ist, der über einen Widerstand (75) mit der Versorgungsspannung (Vcc) verbunden ist.

6. Schaltungsanordnung nach Anspruch 1, dadurch **gekennzeichnet,** daß der Ausgang des Treiberbausteins (72) als offener Kollektor ausgebildet ist, der über einen Widerstand (75) mit der Versorgungsspannung (Vcc) verbunden ist, und daß für die konjunktive Verknüpfung ein Multiplexer (82) vorgesehen ist, dessen erstem Eingang das Hilfssignal (H) und dessen zweitem Eingang das invertierte Ausgangssignal (A1) zugeführt ist und dessen Eingangssignale abhängig von dem Freigabesignal (E1) auf seinen Ausgang durchgeschaltet werden.

7. Schaltungsanordnung nach Anspruch 1 oder 2, dadurch **gekennzeichnet,** daß der Ausgang des Treiberbausteins (72) als offener Kollektor ausgebildet ist, der über einen Widerstand (75) mit der Versorgungsspannung verbunden ist, und daß das Ausgangssignal (A1) und das Freigabesignal (E1) konjunktiv zu einem weiteren Signal (G) verknüpft sind, das mit dem Fehlersignal (F1) zu einem Erkennungssignal (K) disjunktiv verknüpft ist.

8. Schaltungsanordnung nach Anspruch 7, dadurch **gekennzeichnet,** daß für die disjunktive Verknüpfung ein ODER-Glied (92) und für die konjunktive Verknüpfung ein UND-Glied (93) vorgesehen ist.

9. Schaltungsanordnung nach einem der Ansprüche 1 bis 3, dadurch **gekennzeichnet,** daß ein Treiberbaustein (72) vorgesehen ist, dessen Ausgang als offener Kollektor ausgebildet ist, wobei das Entkopplungsglied aus einer Diode (73) besteht.

10. Schaltungsanordnung nach einem der vorhergehenden Ansprüche, dadurch **gekennzeichnet,** daß das Fehlersignal (F1), dessen Dauer eine vorgegebene Zeit unterschreitet, unterdrückt wird.

11. Schaltungsanordnung nach Anspruch 10, dadurch **gekennzeichnet,** daß das Fehlersignal (F1) dem einen Eingang eines UND-Gliedes (101) direkt und seinem anderen Eingang verzögert zugeführt wird.

12. Schaltungsanordnung nach Anspruch 10, dadurch **gekennzeichnet,** daß das Datensignal (D1) und das Freigabesignal (E1) antivalent verknüpft sind, und daß das Ergebnis über ein Verzögerungsglied (141) mit dem Fehlersignal (F1) konjunktiv verknüpft ist.

13. Schaltungsanordnung nach Anspruch 12, dadurch **gekennzeichnet,** daß als Verzögerungsglied (141) ein retriggerbarer monostabiler Multivibrator vorgesehen ist.

14. Schaltungsanordnung nach einem der vorhergehenden Ansprüche, mit einem über ein Taktsignal gesteuerten Datensignal, dadurch **gekennzeichnet,** daß das Fehlersignal (F1) mit einem mit dem Datensignal (D1) synchronisierten Taktsignal (T1) konjunktiv verknüpft ist, dessen Logikpegel nach jeder Änderung des Logikpegels des Datensignals (D1) für eine vorgegebene Zeit logisch 0 ist.

15. Schaltungsanordnung nach einem der vorhergehenden Ansprüche, dadurch **gekennzeichnet,** daß das Freigabesignal (E1) verzögert zugeführt wird.

## Claims

1. A circuit arrangement for detecting erroneous level states of digital signals which are fed to a busline (15) by at least one driver chip (12, 52, 72) driven with data signals (D1), a decoupling element (13, 53, 73) being connected between the respective driver chip (12, 52, 72) and the busline (15), characterised in that the circuit arrangement is designed in such a manner that the output signal (A1) of each driver chip (12, 52, 72) is exclusive-OR-combined with the data signal (D1) to form an auxiliary signal (H) which is AND-combined with an enable signal (E1) to form an error signal (F1) which signals an erroneous level state and thus a faulty operation of the driver chip (12, 52, 72).

2. Circuit arrangement according to Claim 1, characterised in that an AND-gate (21, 91) is provided for the AND operation and an exclusive-OR-gate (20, 30, 80, 90) is provided for the exclusive-OR-operation.

3. Circuit arrangement according to Claim 1, characterised in that a multiplexer (31) is provided for the AND operation, the first input of which is supplied with the auxiliary signal (H) and the second input of which is supplied with a binary signal having the logic level 0, and the input signals of which are switched through to its output as a function of the enable signal (E1).

4. Circuit arrangement according to Claim 1, 2 or 3, having a resistor as decoupling element, characterised in that a driver chip (52) is provided with tristate output, and in that the resistor (53) of the decoupling element has about half the value of the characteristic impedance with which the busline (15) is terminated.

5. Circuit arrangement according to one of Claims 1 to 3, characterised in that the output of the driver chip (72) is constructed as open collector which is connected to the supply voltage (Vcc) via a resistor (75).

6. Circuit arrangement according to Claim 1, characterised in that the output of the driver chip (72) is constructed as open collector which is connected to the supply voltage (Vcc) via a resistor (75), and in that a multiplexer (82) is provided for the AND operation, the first input of which is supplied with the auxiliary signal (H) and the second input of which is supplied with the inverted output signal (A1) and the input signals of which are switched through to its output as a function of the enable signal (E1).

7. Circuit arrangement according to Claim 1 or 2, characterised in that the output of the driver chip (72) is constructed as open collector which is connected to the supply voltage via a resistor (75), and in that the output signal (A1) and the enable signal (E1) are AND-combined to form a further signal (G) which is OR-combined with the error signal (F1) to form a detection signal (K).

8. Circuit arrangement according to Claim 7, characterised in that an OR-gate (92) is provided for the OR operation and an AND-gate (93) is provided for the AND operation.

9. Circuit arrangement according to one of Claims 1 to 3, characterised in that a driver chip (72) is provided, the output of which is constructed as open collector, the decoupling element consisting of a diode (73).

10. Circuit arrangement according to one of the preceding claims, characterised in that the error signal (F1), the duration of which is less than a predetermined time, is suppressed.

11. Circuit arrangement according to Claim 10, characterised in that the error signal (F1) is supplied directly to one input of an AND-gate (101) and delayed to its other input.

12. Circuit arrangement according to Claim 10, characterised in that the data signal (D1) and the enable signal (E1) are exclusive-OR-combined and in that the result is AND-combined with the error signal (F1) via a delay element (141).

13. Circuit arrangement according to Claim 12, characterised in that a retriggerable monostable multivibrator is provided as delay element (141).

14. Circuit arrangement according to one of the preceding claims, comprising a data signal controlled via a clock signal, characterised in that the error signal (F1) is AND-combined with a clock signal (T1) synchronised with the data signal (D1), the logic level of which is a logical 0 for a predetermined time after each change in the logic level of the data signal (D1).

15. Circuit arrangement according to one of the preceding claims, characterised in that the enable signal (E1) is supplied delayed.

## Revendications

1. Montage pour identifier des états de niveaux défectueux de signaux numériques, qui sont introduits par au moins un module d'étage d'attaque (12,52,72), commandé par des signaux de données (D1), dans une ligne formant bus (15), un circuit de découplage (13,53,73) étant respectivement branché entre le module d'étage d'attaque (12,52,72) et la ligne formant bus (15), caractérisé par le fait que le montage est agencé de telle sorte que le signal de sortie (A1) de chaque module d'étage d'attaque (12,52,72) est combiné, selon un mode antivalent, au signal de données (D1) pour former un signal auxiliaire (H), qui est combiné selon la combinaison ET à un signal de libération (E1) pour former un signal d'erreur (F1), qui signale un état de niveau défectueux et par conséquent un travail défectueux du module d'étage d'attaque (12,52,72).

2. Montage suivant la revendication 1, caractérisé par le fait que pour la combinaison ET, il est prévu un circuit ET (21,91) et pour la combinaison antivalente il est prévu un circuit OU-Exclusif (20,30,80,90).

3. Montage suivant la revendication 1, caractérisé par le fait que pour la combinaison ET, il est prévu un multiplexeur (31), à la première entrée duquel est envoyé le signal auxiliaire (H) et à la seconde entrée duquel est envoyé un signal binaire possédant le niveau logique 0, et dont les signaux d'entrée sont interconnectés à la sortie du multiplexeur, en fonction du signal de libération (E).

4. Montage suivant la revendication 1, 2 ou 3, comportant une résistance en tant que circuit de découplage, caractérisé par le fait qu'il est prévu un module d'étage d'attaque (52) comportant une sortie trois-états, et que la résistancce (53) du circuit de découplage est égale approximativement à la moitié de l'impédance caractéristique qui termine la ligne formant bus (15).

5. Montage suivant l'une des revendications 1 à 3, caractérisé par le fait que la sortie du module d'étage d'attaque (72) est réalisée sous la forme d'un collecteur ouvert, qui est raccordé par l'intermédiaire d'une résistance (75) à la tension d'alimentation (Vcc).

6. Montage suivant la revendication 1, caractérisé par le fait que la sortie du module d'étage d'attaque (72) est réalisée sous la forme d'un collecteur ouvert, qui est raccordé par l'intermédiaire d'une résistance (75) à la tension d'alimentation (Vcc), et que pour la combinaison ET, il est prévu un multiplexeur (82), à une première entrée duquel est envoyé le signal auxiliaire (H) et à la seconde entrée duquel est envoyé le signal de sortie inversé (A1) et dont les signaux d'entrée sont transmis à la sortie du multiplexeur, en fonction du signal de libération (E1).

7. Montage suivant la revendication 1 ou 2, caractérisé par le fait que la sortie du module d'étage d'attaque (72) est réalisée sous la forme d'un collecteur ouvert, qui est relié par l'intermédiaire d'une résistance (75) à la tension d'alimentation, et que le signal de sortie (A1) et le signal de libération (E) sont combinés selon la combinaison ET pour former un autre signal (G), qui est combiné selon la combinaison OU au signal d'erreur (FE) pour former un signal d'identification (K).

8. Montage suivant la revendication 7, caractérisé par le fait que pour la combinaison OU, il est prévu un circuit OU (92) et pour la combinaison ET, il est prévu un circuit ET (93).

9. Montage suivant l'une revendications 1 à 3, caractérisé par le fait qu'il est prévu un module d'étage d'attaque (72), dont la sortie est réalisée sous la forme d'un collecteur ouvert, le circuit de découplage étant constitué par une diode (73).

10. Montage suivant l'une des revendications précédentes, caractérisé par le fait que le signal d'erreur (FE), dont la durée tombe au-dessous d'une valeur prédéterminée, est supprimé.

11. Montage suivant la revendication 10, caractérisé par le fait que le signal d'erreur (F1) est envoyé directement à une entrée d'un circuit ET (101) et d'une manière retardée à l'autre entrée de ce circuit.

12. Montage suivant la revendication 10, caractérisé par le fait que le signal de données (D1) et le signal de libération (E1) sont combinés selon un mode antivalent et que le résultat est combiné selon la combinaison ET au signal d'erreur (F1) par l'intermédiaire d'un circuit de retardement (141).

13. Montage suivant la revendication 12, caractérisé par le fait qu'il est prévu, comme circuit de retardement (141), un multivibrateur monostable redéclenchable.

14. Montage suivant l'une des revendications précédentes, comportant un signal de données commandé par l'intermédiaire d'un signal de cadence, caractérisé par le fait que le signal d'erreur (F1) est combiné selon la combinaison ET à un signal de cadence (T1) synchronisé avec le signal de données (D1) et dont le niveau logique est, pendant un intervalle de temps prédéterminé, le 0 logique après chaque modification du niveau logique du signal de données (D1).

15. Montage suivant l'une des revendications précédentes, caractérisé par le fait que le signal de libération (E1) est envoyé en étant retardé.
